# EUROPÄISCHE PATENTSCHRIFT

(11) **EP 3 487 748 B1**
(45) Veröffentlichungstag und Bekanntmachung des Hinweises auf die Patenterteilung: **20.04.2022**
(21) Anmeldenummer: 17771993.7
(22) Anmeldetag: 06.09.2017
(51) Int. Cl.: B61L 27/00

(54) **ÜBERWACHUNG VON INFRASTRUKTUREINRICHTUNGEN MITTELS GEOCLUSTERING**
MONITORING INFRASTRUCTURE FACILITIES BY MEANS OF GEO-CLUSTERING
SURVEILLANCE D'INFRASTRUCTURES PAR REGROUPEMENT GÉOGRAPHIQUE

(30) Priorität: 19.09.2016 DE 102016217883
(43) Veröffentlichungstag der Anmeldung: 29.05.2019
(73) Patentinhaber: Siemens Mobility GmbH, 81739 München (DE)
(72) Erfinder: AUFDERHEIDE, Helge, 80634 München (DE)
(86) Internationale Anmeldenummer: PCT/EP2017/072292
(87) Internationale Veröffentlichungsnummer: WO 2018/050502

(56) Entgegenhaltungen:
- EP-A1- 1 900 597
- EP-A1- 3 042 823
- EP-A2- 2 375 302
- WO-A1-2016/112358

## Beschreibung

Die Erfindung betrifft ein Verfahren sowie ein Computerprogrammprodukt zur Ausführung des Verfahrens zur Überwachung von Infrastruktureinrichtungen eines Streckennetzes für Fahrzeuge, welche Fahrzeuge Meldungen über ihren jeweiligen Betriebszustand erzeugen, die mit einem Zeitpunkt und einer Ortsangabe, die das Auftreten des gemeldeten Betriebszustands repräsentieren, verknüpft an eine landseitige Auswerteeinrichtung versandt werden, die von der landseitigen Auswerteeinrichtung empfangen, in einer Datenbank gespeichert und ausgewertet werden.

Vor- oder Störfälle technischer Natur können im Betrieb von Fahrzeugen, beispielsweise von Schienenfahrzeugen, unterschiedliche Ursachen haben. So kann beispielsweise ein unbeabsichtigtes Absenken eines Stromabnehmers ("herunterfallen") auf eine zu geringe Kontaktkraft zurückzuführen sein, die eine Fehlfunktion des Schienenfahrzeugs selbst darstellt, oder aber durch fahrzeugexterne Begebenheiten bedingt sein, beispielsweise durch eine fehlerhafte Übergangsstelle zwischen zwei miteinander verbundenen Einzeldrähten der Oberleitung. Auch die Ursachen für übermäßigen Funkenflug oder das Durchdrehen von angetriebenen Rädern können sowohl beim Fahrzeug selbst als auch bei Infrastruktureinrichtungen zu finden sein.

Eine Voraussetzung, die technischen Vorfälle zu minimieren, besteht somit in der Kenntnis der Ursachen für die technischen Vorfälle, ohne die diese nicht behoben werden können. Sollte das unbeabsichtigte Absenken eines Stromabnehmers auf das Fahrzeug selbst zurückzuführen sein, müsste das Fahrzeug überprüft werden. Im anderen Fall müsste entsprechend die Oberleitung an der entsprechenden Stelle überprüft werden.

Ohne detaillierte Kenntnisse der Ursachen müssten das Fahrzeug sowie das Streckennetz überprüft werden.

Beides geschieht derzeit durch Sichtkontrollen, was zu einem Ausfall des Fahrzeugs für die Zeit zur Überprüfung und gegebenenfalls zur Reparatur und zu einer Sperrung des Streckennetzes im entsprechenden Abschnitt für die Zeit zur Überprüfung und gegebenenfalls zur Reparatur führt.

Die EP 1 900 597 A1 lehrt nun ein Diagnoseverfahren zur Überwachung von Infrastruktureinrichtungen für Schienenfahrzeuge und von einer Flotte von Schienenfahrzeugen. Hierfür werden Daten von den Infrastruktureinrichtungen und von den Schienenfahrzeugen zusammengeführt, daraufhin Reihen von kategorisierten Ereignisdaten erzeugt und diese miteinander verglichen, um einen Standort einer Infrastruktureinrichtung oder ein Schienenfahrzeug zu identifizieren, dessen Ereignisdaten sich von den anderen signifikant unterscheiden. Die EP 2 375 302 A2 betrifft Transportfahrzeuge für Fabriken. Die einzelnen Fahrzeuge werden angewiesen, Messungen an bestimmten, vorgegebenen Orten durchzuführen, mit dem Ziel, die Ursache einer Abweichung von Messdaten der anderen Fahrzeuge in der Infrastruktur oder im Fahrzeug zu erkennen.

Der Erfindung liegt die Aufgabe zugrunde, die technische Verfügbarkeit von Fahrzeugen und Streckennetz zu erhöhen und gleichzeitig deren Betriebskosten deutlich zu verringern.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Verfahren zur Überwachung von Infrastruktureinrichtungen eines Streckennetzes für Fahrzeuge, welche Fahrzeuge Meldungen über ihren jeweiligen Betriebszustand erzeugen, die mit einem Zeitpunkt und einer Ortsangabe, die das Auftreten des gemeldeten Betriebszustands repräsentieren, verknüpft an eine landseitige Auswerteeinrichtung versandt werden, die von der landseitigen Auswerteeinrichtung empfangen, in einer Datenbank gespeichert und ausgewertet werden, umfasst folgende Verfahrensschritte:
- Auslesen der Meldungen eines vorgegebenen Zeitraums zu wenigstens einem vorgegebenem Betriebszustand aus der Datenbank;
- Ermitteln von begrenzten Gebieten mit gehäuftem Auftreten des vorgegebenen Betriebszustands mittels eines vorgegebenen automatischen Segmentierungsalgorithmus' durch Gruppieren der Ortsangaben;
- Erkennen der Infrastruktureinrichtungen in den Gebieten des gehäuften Auftretens des vorgegebenen Betriebszustands als mögliche Ursache des vorgegebenen Betriebszustands der Fahrzeuge und
- Ausgeben von Informationen über die als mögliche Ursache des vorgegebenen Betriebszustands der Fahrzeuge erkannten Infrastruktureinrichtungen.

Das erfindungsgemäße Verfahren ist vorteilhaft ein computerimplementiertes Verfahren, liegt insofern als Software vor und ist einfach auf einem Speichermedium zu speichern, zu transportieren und von diesem wieder in eine Recheneinheit zu laden. Es wird von einem Computerprogrammprodukt (Datenträger mit Code) gesprochen, welches, wenn in einen Computer geladen, das erfindungsgemäße Verfahren zur Ausführung bringt. Die Auswerteeinrichtung weist entsprechend sowohl Mittel zum Auslesen des Speichermediums mit darauf gespeicherten und auslesbaren dem computerimplementierten Verfahren auf, sowie eine zur Ausführung des computerimplementierten Verfahren geeignet ausgebildete Recheneinheit.

Neben der Identifikation von begrenzten Gebieten mit gehäuftem Auftreten können so auch Gebiete mit vereinzeltem Auftreten des vorgegebenen Betriebszustands ermittelt werden. Eine Weiterbildung der Erfindung besteht somit im
- Erkennen der Fahrzeuge in, insbesondere begrenzten, Gebieten vereinzelten Auftretens des vorgegebenen Betriebszustands als mögliche Ursache des vorgegebenen Betriebszustands der Fahrzeuge und
- Ausgeben von Informationen über die als mögliche Ursache des vorgegebenen Betriebszustands der Fahrzeuge erkannten Fahrzeuge.

Die Gebiete vereinzelten Auftretens des vorgegebenen Betriebszustands sind ungleich den Gebieten des gehäuften Auftretens und liegen somit außerhalb dieser. Nachfolgende Betrachtungen, insbesondere zum Ermitteln der Ursachen oder zum Ausgeben der Ursachen, zu den begrenzten Gebieten des gehäuften Auftretens des vorgegebenen Betriebszustands sollen auch für die Gebiete vereinzelten Auftretens des vorgegebenen Betriebszustands gleichermaßen gelten.

Bei den Fahrzeugen handelt es sich insbesondere um Schienenfahrzeuge. Das Streckennetz ist dann ein Streckennetz für Schienenfahrzeuge. Es umfasst Infrastruktureinrichtungen wie beispielsweise Gleise mit Schienen und Weichen, Signalanlagen oder Fahrleitungen, meist als Oberleitungen oder Stromschienen ausgeführt. Gemäß einer Weiterbildung des erfindungsgemäßen Verfahrens dient dieses somit zur Überwachung von Infrastruktureinrichtungen eines Streckennetzes für Schienenfahrzeuge.

Die Meldungen werden auf den Fahrzeugen erzeugt und an wenigstens eine landseitige Auswerteeinrichtung beispielsweise drahtlos übermittelt. Dazu weist jedes Fahrzeug zumindest eine Sendeeinrichtung und die wenigstens eine landseitige Auswerteeinrichtung zumindest eine Empfangseinrichtung auf. Die Meldungen umfassen dabei Daten zu einem aktuellen Betriebszustand in vorgegebener Form, so dass sie von der landseitigen Auswerteeinrichtung auswertbar sind. Die landseitige Auswerteeinrichtung ist, wie oben angedeutet, entsprechend geeignet ausgebildet. Zusätzlich umfassen die Meldungen wenigstens den Zeitpunkt und den Ort des Auftretens des gemeldeten Betriebszustands in vorgegebener Form, beispielsweise wird der Ort mittels GPS-Koordinaten oder mittels anderen Sattelitennavigationsdaten, wie z.B. GPS, GLONASS, Galileo, BEIDOU etc., angegeben.

Zunächst werden die in der Datenbank gespeicherten Meldungen zu einem oder mehreren vorgegebenen Betriebszuständen, die innerhalb eines vorgegebenen Zeitraums erzeugt wurden, ausgelesen. Es könnten auch sämtliche Meldungen des Zeitintervalls ausgelesen und anschließend nach vorgegebenen Betriebszuständen gruppiert oder nach den einzelnen Betriebszuständen sortiert weiter verarbeitet werden.

Um Orte bzw. begrenzte Gebiete mit gehäuftem Auftreten des vorgegebenen Betriebszustands zu ermitteln und so letztlich die an den Orten bzw. in den Gebieten des gehäuften Auftretens des vorgegebenen Betriebszustands befindlichen Infrastruktureinrichtungen als mögliche Ursache des vorgegebenen Betriebszustands der Fahrzeuge zu erkennen, wird ein vorgegebener Algorithmus eingesetzt.

Die begrenzten Gebiete können dabei einerseits voneinander abgegrenzt sein und somit nicht einander überlappen. Andererseits können ihre jeweilige Größe und damit ihre flächige Ausdehnung eng begrenzt sein - sie sind dann im Vergleich zur Gesamtfläche eines zu betrachtenden Gesamtgebiets, welches sämtliche zu überwachenden Infrastruktureinrichtungen umfasst und in welchem sämtliche auszuwertenden Meldungen zu dem vorgegebenen Betriebszustand aufgetreten sind, relativ klein. Die begrenzten Gebiete können gegebenenfalls auch gleich groß gewählt sein.

Wie bereits ausgeführt werden die begrenzten Gebiete mit gehäuftem Auftreten des vorgegebenen Betriebszustands mittels eines vorgegebenen automatischen Segmentierungsalgorithmus', durch Gruppieren der Ortsangaben ermittelt. Ein begrenztes Gebiet mit mehrfachem Auftreten des wenigstens einen vorgegebenen Betriebszustands kann auch als Cluster bezeichnet werden. Daher kann hier auch von Clustering oder Geo-Clustering gesprochen werden.

Dazu sind verschiedene, geeignete Algorithmen bekannt geworden, insbesondere sogenannte Clusteranalysen, insbesondere aus dem Bereich des maschinellen Lernens ("machine learning clustering methods"). Automatische Segmentierungsalgorithmen aus dem Bereich des unüberwachten Lernens dienen dabei der Entdeckung von Mustern oder Ähnlichkeitsstrukturen in (gro-βen) Datenbeständen, die vom strukturlosen Rauschen abweichen.

Gemäß einer weiteren Weiterbildung werden die begrenzten Gebiete mit gehäuftem Auftreten des vorgegebenen Betriebszustands mittels eines K-Means-Algorithmus ermittelt.

Bei der Anwendung des K-Means-Algorithmus' wird eine Anzahl an möglichen begrenzten Gebieten innerhalb eines Gesamtgebiets vorgegeben. Diese Anzahl an möglichen begrenzten Gebieten innerhalb des Gesamtgebiets wird weitergebildet in Abhängigkeit der Größe bzw. der flächigen Ausdehnung des Gesamtgebiets und in Abhängigkeit des vorgegebenen Betriebszustands vorgegeben. Weitergebildet wird eine sehr große Anzahl an möglichen begrenzten Gebieten innerhalb des Gesamtgebiets vorgegeben, damit sporadische Einzelfälle jeweils einem eigenen begrenzten Gebiet zugewiesen werden, so dass diese nachfolgend als "Rauschen" herausgefiltert werden, anstatt sie dem nächstgelegenen Gebiet zuzuordnen. So können beispielsweise auf einem Gesamtgebiet von 100.000 km² 10.000 mögliche Gebiete vorgegeben werden, so dass jedes begrenzte Gebiet lediglich 10 km² umfasst. Je nach Anzahl der zu überwachenden Infrastruktureinrichtungen, beispielsweise der Anzahl an Weichen, im Gesamtgebiet oder ja nach deren geballten Anordnung im Gesamtgebiet, beispielsweise im Bereich von Bahn- oder Betriebshöfen, können die begrenzten Gebiete auch kleiner oder größer gewählt werden.

Alternativ zum K-Means-Algorithmus kann ein DBSCAN-Algorithmus zum Ermitteln von Orten mit gehäuftem Auftreten des vorgegebenen Betriebszustands genutzt werden. DBSCAN steht dabei für Density-Based Spatial Clustering of Applications with Noise (zu Deutsch etwa: Dichtebasierte räumliche Clusteranalyse mit Rauschen). Dieser Algorithmus operiert hauptsächlich mit einem vorgegebenen Parameter, nämlich der maximalen Distanz zwischen den Orten des Auftretens der vorgegebenen Betriebszustände im selben begrenzten Gebiet. Zur Ermittlung der begrenzten Gebiete mit gehäuftem Auftreten des vorgegebenen Betriebszustands mittels des DBSCAN-Algorithmus wird somit weitergebildet eine maximale Distanz zwischen den Orten des Auftretens der vorgegebenen Betriebszustände im selben begrenzten Gebiet in Abhängigkeit des vorgegebenen Betriebszustands vorgegeben. Auch hier kann je nach zu überwachender Infrastruktureinrichtung - und damit in Abhängigkeit des vorgegebenen Betriebszustands des Fahrzeugs - die maximale Distanz gewählt werden. So kann zum Beispiel zur Überwachung von Oberleitungen oder Weichen eine maximale Distanz von 100m vorgegeben werden. Neben der maximalen Distanz kann bei der Ermittlung der begrenzten Gebiete mittels des DBSCAN-Algorithmus' ein weiterer Parameter vorgegeben werden, nämlich die Anzahl der mindestens zu erreichenden "Nachbarn". Durch diesen Parameter wird definiert, wann ein vereinzeltes Auftreten des vorgegebenen Betriebszustands vorliegt und er wird typischerweise auf z > 1 gesetzt, beispielsweise auf z = 3.

Weitere Algorithmen sind denkbar und beispielsweise in der Gruppe der Gaussian Mixture Models (GMM) zu finden.

Eine weitere Weiterbildung der Erfindung besteht darin, dass zum Ermitteln von den begrenzten Gebieten mit gehäuftem Auftreten des vorgegebenen Betriebszustands mittels des vorgegebenen Algorithmus' ausschließlich Meldungen zum vorgegebenen Betriebszustand von Fahrzeugen auf nichtidentischen Fahrten berücksichtigt werden. Dies kann praktisch als eine der oben beschriebenen Segmentierung mittels K-Means- oder DBSCAN-Algorithmus nachfolgende Filterung erfolgen. Wie oben bereits beschrieben, kann, um die Anzahl an zu filternden begrenzten Gebieten zu reduzieren, je nach Auftreten des vorgegebenen Betriebszustands, beim DBSCAN-Algorithmus, die Anzahl der mindestens zu erreichenden Nachbarn erhöht werden.

So werden zwei Meldungen von ein und demselben Fahrzeug in einem begrenzten Gebiet nur einmal berücksichtigt, wenn nicht eine größere vorgegebenen Zeit, typischerweise mehrere Stunden oder ein Tag, zwischen ihnen liegt. Das Fahrzeug muss sich zwischendurch wegbewegt haben oder es muss zwischendurch ab- und wieder aufgerüstet worden sein. Bei einem Zweirichtungsfahrzeug könnte auch die Umkehrung der Fahrtrichtung dieselbe Wirkung haben. Weitergebildet werden zum Ermitteln von den begrenzten Gebieten mit gehäuftem Auftreten des vorgegebenen Betriebszustands mittels des vorgegebenen Algorithmus' ausschließlich Meldungen zum vorgegebenen Betriebszustand von nichtidentischen Fahrzeugen berücksichtigt. Die nichtidentischen Fahrzeuge sind nicht zwingend unterschiedlich ausgerüstet. Fahrzeuge gleicher Bauart können in allen technisch relevanten Merkmalen völlig übereinstimmend ausgebildet sein. Es darf sich jedoch nicht um dasselbe Fahrzeug handeln, welches zu zwei unterschiedlichen Zeitpunkten innerhalb des betrachteten Zeitraums am selben Ort bzw. im selben begrenzten Gebiet zwei Meldungen zum vorgegebenen Betriebszustand erzeugt und übermittelt hat.

Die Angabe der oben genannten Parameter, beispielsweise der der Vorgabe einer Anzahl an möglichen begrenzten Gebieten innerhalb eines Gesamtgebiets der Meldungen zu dem vorgegebenen Betriebszustand oder der maximalen Distanz zwischen den Orten des Auftretens der vorgegebenen Betriebszustände im selben begrenzten Gebiet, kann durch den Benutzer erfolgen. Weitergebildet können sämtliche Parameter zum Ermitteln der begrenzten Gebiete mit gehäuftem Auftreten des vorgegebenen Betriebszustands mittels des vorgegebenen Algorithmus' von einem Benutzer vorgegeben werden.

Zusätzlich oder alternativ wird das Ausgeben von Informationen von einem Benutzer beeinflusst. Der Benutzer kann so beispielsweise Schwellwerte vorgeben, die über. Oder unterschritten werden müssen, damit Informationen dem Benutzer ausgegeben werden. Schwellwerte könnten die Anzahl x an Meldungen zum vorgegebenen Betriebszustand von Fahrzeugen auf nichtidentischen Fahrten und/oder eine Anzahl y an Meldungen zum vorgegebenen Betriebszustand in einem begrenzten Gebieten mit gehäuftem Auftreten des vorgegebenen Betriebszustands betreffen. Wenn beispielsweise in einem ersten begrenzten Gebieten mit gehäuftem Auftreten des vorgegebenen Betriebszustands drei Meldungen zum vorgegebenen Betriebszustand von Fahrzeugen auf nichtidentischen Fahrten vorliegen und in einem zweiten begrenzten Gebiet sind es deren fünf, und wenn nun der entsprechende Schwellwert auf mindestens vier gesetzt wird, wird nur das zweite Gebiet bzw. die im zweiten Gebiet befindlichen Infrastruktureinrichtungen als mögliche Ursache des vorgegebenen Betriebszustands der Fahrzeuge ausgegeben.

So kann beispielsweise das Ermitteln der begrenzten Gebiete mit gehäuftem Auftreten des vorgegebenen Betriebszustands mittels des vorgegebenen Algorithmus' oder wenigstens das Ausgeben von Informationen über die als mögliche Ursache des vorgegebenen Betriebszustands der Fahrzeuge erkannten Infrastruktureinrichtungen fürderhin in Abhängigkeit erfolgen von einer vorgegebenen relativen Häufigkeit der Meldungen zu dem wenigstens einen vorgegebenen Betriebszustand in den vorgegebenen möglichen begrenzten Gebieten mit gehäuftem Auftreten des vorgegebenen Betriebszustands relativ zu einer aus der Datenbank ausgelesenen und mittels des vorgegebenen Algorithmus' verarbeiteten Gesamtanzahl an Meldungen zu dem wenigstens einen vorgegebenen Betriebszustand. So können lediglich Cluster ausgegeben werden mit einer hohen relativen Anzahl, beispielsweise 1-10% der Gesamtanzahl an Meldungen zu dem wenigstens einen vorgegebenen Betriebszustand.

Sowohl die Auswerteeinheit sowie auch das Computerprogrammprodukt sind selbstverständlich geeignet auszubilden.

Die Informationen über die begrenzten Gebiete mit den als mögliche Ursache des vorgegebenen Betriebszustands der Fahrzeuge erkannten Infrastruktureinrichtungen bzw. unmittelbar über die so erkannten Infrastruktureinrichtungen, können ihrerseits wiederum in Form von Meldungen ausgegeben werden, beispielsweise über einen Bildschirm in der Auswerteeinrichtung.

Zusätzlich zu den ausgegebenen Informationen über die begrenzten Gebiete mit den als mögliche Ursache des vorgegebenen Betriebszustands der Fahrzeuge erkannten Infrastruktureinrichtungen bzw. über die als mögliche Ursache des vorgegebenen Betriebszustands der Fahrzeuge erkannten Infrastruktureinrichtungen können Informationen ausgegeben werden zu
- einer Gesamtanzahl an aus der Datenbank ausgelesenen und mittels des vorgegebenen Algorithmus' verarbeiteten Meldungen zu dem wenigstens einen vorgegebenen Betriebszustand und/oder zu
- einer jeweiligen absoluten Anzahl an Meldungen zu dem wenigstens einen vorgegebenen Betriebszustand in den Gebieten mit gehäuftem Auftreten des vorgegebenen Betriebszustands und/oder zu
- einer jeweiligen relativen Häufigkeit der Meldungen zu dem wenigstens einen vorgegebenen Betriebszustand in den Gebieten mit gehäuftem Auftreten des vorgegebenen Betriebszustands relativ zu der aus der Datenbank ausgelesenen und mittels des vorgegebenen Algorithmus' verarbeiteten Gesamtanzahl an Meldungen zu dem wenigstens einen vorgegebenen Betriebszustand und/oder zu
- einer jeweiligen Anzahl an Meldungen zu dem wenigstens einen vorgegebenen Betriebszustand von nichtidentischen Fahrzeugen und/oder von Fahrzeugen auf nichtidentischen Fahrten in den Gebieten mit gehäuftem Auftreten des vorgegebenen Betriebszustands und/oder zu
- einer jeweiligen Anzahl an Meldungen zu dem wenigstens einen vorgegebenen Betriebszustand von nichtidentischen Fahrzeugen oder von Fahrzeugen auf nichtidentischen Fahrten in den Gebieten mit gehäuftem Auftreten des vorgegebenen Betriebszustands und/oder zu
- einer jeweiligen relativen Häufigkeit an Meldungen zu dem wenigstens einen vorgegebenen Betriebszustand von nichtidentischen Fahrzeugen oder von Fahrzeugen auf nichtidentischen Fahrten in den Gebieten mit gehäuftem Auftreten des vorgegebenen Betriebszustands relativ zu der aus der Datenbank ausgelesenen und mittels des vorgegebenen Algorithmus' verarbeiteten Gesamtanzahl an Meldungen zu dem wenigstens einen vorgegebenen Betriebszustand und/oder zu
- einer jeweiligen flächigen Ausdehnung der begrenzten Gebiete mit gehäuftem Auftreten des vorgegebenen Betriebszustands und/oder zu
- einer Anzahl an möglichen begrenzten Gebieten innerhalb eines Gesamtgebiets der Meldungen zu dem vorgegebenen Betriebszustand und/oder zu
- dem Algorithmus zum Ermitteln der begrenzten Gebiete mit gehäuftem Auftreten des vorgegebenen Betriebszustands und/oder zu
- den vorgegebenen Parametern des Algorithmus' zum Ermitteln der begrenzten Gebiete mit gehäuftem Auftreten des vorgegebenen Betriebszustands und/oder zu
- dem vorgegebenen Betriebszustand.

Insbesondere können die einzelnen begrenzten Gebiete mit gehäuftem Auftreten des vorgegebenen Betriebszustands nach verschiedenen Kriterien in Ranglisten eingeteilt werden, beispielsweise nach
- der jeweiligen absoluten Anzahl an Meldungen zu dem wenigstens einen vorgegebenen Betriebszustand in den Gebieten mit gehäuftem Auftreten des vorgegebenen Betriebszustands und/oder nach
- der jeweiligen relativen Häufigkeit der Meldungen zu dem wenigstens einen vorgegebenen Betriebszustand in den Gebieten mit gehäuftem Auftreten des vorgegebenen Betriebszustands relativ zu der aus der Datenbank ausgelesenen und mittels des vorgegebenen Algorithmus' verarbeiteten Gesamtanzahl an Meldungen zu dem wenigstens einen vorgegebenen Betriebszustand und/oder nach
- der jeweiligen Anzahl an Meldungen zu dem wenigstens einen vorgegebenen Betriebszustand von nichtidentischen Fahrzeugen und/oder von Fahrzeugen auf nichtidentischen Fahrten in den Gebieten mit gehäuftem Auftreten des vorgegebenen Betriebszustands.

Weitergebildet wird eine Rangliste der Gebiete mit gehäuftem Auftreten des vorgegebenen Betriebszustands erstellt und ausgegeben in Abhängigkeit
- einer jeweiligen Anzahl der Meldungen zu dem wenigstens einen vorgegebenen Betriebszustand, insbesondere von nichtidentischen Fahrzeugen oder von Fahrzeugen auf nichtidentischen Fahrten, in den Gebieten mit gehäuftem Auftreten des vorgegebenen Betriebszustands und/oder
- einer jeweiligen flächigen Ausdehnung der begrenzten Gebiete mit gehäuftem Auftreten des vorgegebenen Betriebszustands.

Somit wird die Signifikanz der begrenzten Gebieten mit gehäuftem Auftreten des vorgegebenen Betriebszustands mittels eines vorgegebenen Algorithmus' ermittelt und in einer Rangliste ausgegeben, beispielsweise auf einem Bildschirm dargestellt. Die begrenzten Gebiete können auf einer Landkarte dargestellt werden, beispielsweise als Kreise. Die Farben der Kreise können den vorgegebenen Betriebszustand wiederspiegeln. Die Größen der Kreise wiederum können analog die relative Häufigkeit der Meldungen zu dem vorgegebenen Betriebszustand in dem begrenzten Gebiet skizzieren.

Eine weitere vorteilhafte Weiterbildung der Erfindung besteht darin, dass weitere Meldungen zu dem wenigstens einen vorgegebenen Betriebszustand, die mit einem Zeitpunkt, der das Auftreten des gemeldeten Betriebszustands repräsentiert, verknüpft sind, welcher nach dem vorgegebenen Zeitraum liegt, mit dem vorgegebenen Algorithmus verarbeitet werden, ohne die Meldungen des vorgegebenen Zeitraums zu wenigstens einem vorgegebenem Betriebszustand erneut aus der Datenbank auszulesen und zu verarbeiten.

Dazu wird wenigstens eine weitere Meldung nach dem vorgegebenen Zeitraum zu dem wenigstens einen vorgegebenen Betriebszustand aus der Datenbank ausgelesen und mittels des vorgegebenen Algorithmus' ermittelt, ob die wenigstens eine weitere Meldung einem begrenzten Gebiet mit gehäuftem Auftreten des vorgegebenen Betriebszustands zuzuordnen ist

Anschließend werden wiederum - falls die wenigstens eine weitere Meldung einem begrenzten Gebiete mit gehäuftem Auftreten des vorgegebenen Betriebszustands zuzuordnen ist - die begrenzten Gebiete des gehäuften Auftretens des vorgegebenen Betriebszustands bzw. die in den begrenzten Gebieten befindlichen Infrastruktureinrichtungen als mögliche Ursache des vorgegebenen Betriebszustands der Fahrzeuge erkannt und Informationen über die begrenzten Gebiete des gehäuften Auftretens des vorgegebenen Betriebszustands bzw. über die als mögliche Ursache des vorgegebenen Betriebszustands der Fahrzeuge erkannten Infrastruktureinrichtungen ausgegeben. Ansonsten würde es sich um ein vereinzeltes Auftreten handeln und das Fahrzeug als Ursache ausgegeben werden.

Ja nach verwendetem Algorithmus verlaufen die Verarbeitung der Meldungen nach dem vorgegebenen Zeitraum und damit das Ermitteln der begrenzten Gebiete mit gehäuftem Auftreten des vorgegebenen Betriebszustands unterschiedlich.

So kann beispielsweise ermittelt werden, ob die Meldung an einem Ort generiert wurde, welcher in einem begrenzten Gebiet mit gehäuftem Auftreten des vorgegebenen Betriebszustands liegt, welchem begrenzten Gebiet also bereits mindestens zwei oder mehrere Meldungen aus dem vorgegebenen Zeitraum zugeordnet waren. War lediglich eine einzige Meldung aus dem vorgegebenen Zeitraum dem begrenzten Gebiet zugeordnet, handelte es sich bisher um ein vereinzeltes Auftreten. Je nach Kriterium kann das begrenzte Gebiet nach der Zuordnung der weiteren Meldung zu diesem begrenzten Gebiet als begrenztes Gebiet mit gehäuftem Auftreten des vorgegebenen Betriebszustands erkannt und ausgegeben werden. Eine alternative besteht darin, dass die Abstände des Ortes der weiteren Meldung zu den nächstliegenden Orten der Meldungen aus dem vorgegebenen Zeitraum berechnet werden und ermittelt wird, ob diese einem bestehenden Cluster zuzuordnen sind, ob ein neues Cluster erkannt wird oder ob es sich um ein vereinzeltes Auftreten des vorgegebenen Betriebszustands handelt.

Natürlich verändert dies die Gesamtanzahl an aus der Datenbank ausgelesenen und mittels des vorgegebenen Algorithmus' verarbeiteten Meldungen und die entsprechenden relativen Häufigkeiten. Dies wird weitergebildet entsprechend berücksichtigt.

Wie oben bereits ausgeführt besteht eine weitere Weiterbildung der Erfindung darin, dass das Verfahren zur Überwachung von Infrastruktureinrichtungen eines Streckennetzes für Schienenfahrzeuge ausgebildet ist. Weitergebildet betrifft der wenigstens eine vorgegebene Betriebszustand
- einen ungeplant abgesenkten Stromabnehmer der Schienenfahrzeuge,
- ein ungeplantes Abschalten eines Stromsystems der Schienenfahrzeuge,
- eine Sandausschüttung der Schienenfahrzeuge,
- eine Öl-Schmierung der Schienen durch die Schienenfahrzeuge,
- einen fehlgeschlagenen Kupplungsvorgang der Schienenfahrzeuge,
- Türöffnungsfehler der Schienenfahrzeuge,
- die Überschreitung eines vorgegebenen Ruckwerts der Schienenfahrzeuge,
- Schnellbremsungen der Schienenfahrzeuge und/oder
- Kommunikationsfehler der Schienenfahrzeuge mit einer Leitstelle.

Ein ungeplant abgesenkter Stromabnehmer oder auch Pantograph genannt wird beispielsweise durch den Zug-Selbstschutz abgesenkt, beispielsweise wenn der Stromabnehmer einen Schlag von außen, insbesondere von der Oberleitung als Infrastruktureinrichtung, bekommt oder wenn die Andruck-Kraft zu gering ist. Ein ungeplantes Abschalten eines Stromsystems, insbesondere von Lokomotiven, erfolgt z.B. wenn die Überwachung der Eingangsspannung und des Eingangsstromes in die Lok eine Überspannung anzeigt oder wenn die Lok einen Kurzschluss oder Erdschluss detektiert oder wenn auf einem bestimmten Wechselstromfrequenzband keine stabile Spannung geliefert wird (50Hz/100Hz-Schutz). Eine Sandausschüttung auf die Schiene - auch "Sandung" der Schiene genannt, erfolgt z.B. wenn die Schiene an bestimmten Stellen verdreckt ist, typischerweise an Bahnübergängen, sodass das jeweilige Schienenfahrzeug, beispielsweise eine Lok, wegrutscht (Gleitschleuderschutz). Eine Öl-Schmierung der Schienen durch die Schienenfahrzeuge erfolgt z.B. wenn die Lok einen zu hohen Anfahrwiderstand hat. Fehlgeschlagene Kupplungsvorgänge beispielsweise mit anderen Schienenfahrzeugen oder mit weiteren Teilen desselben Schienenfahrzeugs, insbesondere mit anderen Wagen oder Loks kommen z.B. vor, wenn in einer engen Kurve gekuppelt werden soll oder auf einen Benutzerfehler zurückgeht, z.B. steckender Zündschüssel, was sich örtlich durchaus häufen kann. Überschreitungen eines vorgegebenen Ruckwerts, also Stöße durch hohe Beschleunigungswert-Ausreißer kommen z.B. vor, wenn Güterwagen bei einem Kuppelungsvorgang zu heftig aufeinander gefahren werden oder aufgrund von schlechten Schienenabschnitten, wie Unebenheiten oder verzogenen Schienen. Auch Schnellbremsungen werden typischerweise durch das Zugsicherungssystem ausgelöst, beispielsweise bei defekter Sicherheits-Balise oder durch äußere Störeinflüsse, wie z.B. ein Radarsystem in der Nähe. Türöffnungsfehler treten z.B. durch unebene Bahnsteigkanten auf. Kommunikationsfehler kommen häufig vor, wenn die Funkverbindung zur Zugleitstelle abbricht (Funklöcher).

Weitergebildet kann die Meldung über den jeweiligen Betriebszustand des Fahrzeugs, die das Auftreten des gemeldeten Betriebszustands repräsentiert, auch einen oder mehrere Messwerten zumindest einer Messgröße umfassen oder durch einen oder mehrere Messwerten zumindest einer Messgröße gebildet sein. Dann umfasst das Fahrzeug wenigstens eine Messeinrichtung zur Erfassung von Messwerten zumindest einer Messgröße umfassen. Eine Meldung zu einem vorgegebenen Betriebszustand, insbesondere eine Fehlermeldung, wird beispielsweise nur erzeugt, wenn wenigstens ein Messwert der außerhalb eines vorgegebenen Betriebsbereichs liegt.

Mit dem Verfahren kann neben den begrenzten Gebieten auch ein bestimmtes Fahrzeug aus der Gruppe der Fahrzeuge erkannt werden, bei welchem ein vorgegebener Betriebszustand gehäuft auftritt:
- Ermitteln von Fahrzeugen mit gehäuftem Auftreten des vorgegebenen Betriebszustands außerhalb der begrenzten Gebiete des gehäuften Auftretens des vorgegebenen Betriebszustands mittels eines vorgegebenen Algorithmus';
- Erkennen der Fahrzeuge des gehäuften Auftretens des vorgegebenen Betriebszustands außerhalb der begrenzten Gebiete des gehäuften Auftretens des vorgegebenen Betriebszustands als mögliche Ursache des vorgegebenen Betriebszustands der Fahrzeuge und
- Ausgeben einer Information über die als mögliche Ursache des vorgegebenen Betriebszustands der Fahrzeuge erkannten Fahrzeuge.

Somit wird auch ausgeschlossen, dass das Auftreten an den als mögliche Ursache des vorgegebenen Betriebszustands der Fahrzeuge erkannten Infrastruktureinrichtungen erfolgt.

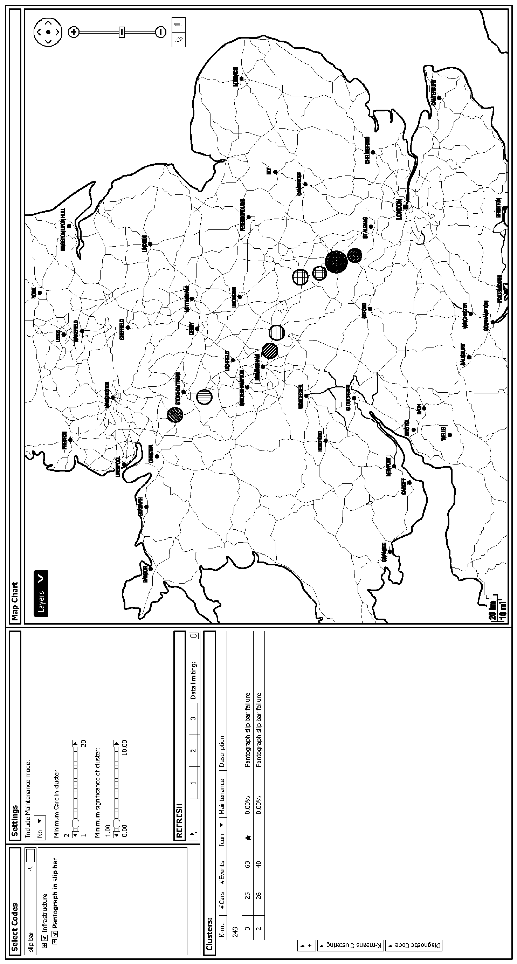

Die Figur zeigt einen Bildschirmausschnitt (Screenshot) mit einem Ausschnitt einer Darstellung einer Landkarte mit mehreren Infrastruktureinrichtungen eines Streckennetzes für Schienenfahrzeuge auf einem Bildschirm einer landseitigen Auswerteeinrichtung. Mehrere Schienenfahrzeuge befahren, insbesondere unabhängig voneinander, dieses Streckennetz und erzeugen Meldungen zu ihren jeweiligen Betriebszuständen. Diese werden einem Zeitstempel und einer Ortsangabe versehen und an die landseitige Auswerteeinrichtung versandt, von dieser empfangen, gemäß den jeweils gemeldeten Betriebszuständen eingeordnet in einer Datenbank gespeichert und mittels eines vorgegebenen Algorithmus' ausgewertet, um das Streckennetz zu überwachen.

Dazu werden die Meldungen zu wenigstens einem vorgegebenen Betriebszustand, die innerhalb eines vorgegebenen Intervalls erzeugt wurden, aus der Datenbank ausgelesen. Auch können Meldungen zu mehreren Betriebszuständen, die einer vorgegebenen Kategorie oder einer Gruppe vorgegebener Betriebszustände zugeordnet sind, beispielsweise eine bestimmte Gleichartigkeit aufweisen, ausgelesen und gemeinsam weiterverarbeitet werden. Anschließend werden die Meldungen nach den Orten ihres Auftretens gruppiert und begrenzte Gebiete mit gehäuftem Auftretens des vorgegebenen Betriebszustands ermittelt und ausgegeben, indem diese in der Karte dargestellt werden.

Hier veranschaulichen mehrere Kreise auf der Landkarte die begrenzten Gebiete mit gehäuftem Auftreten der vorgegebenen Betriebszustände. Die Betriebszustände können auf der linken Seite aus einer Liste vom Benutzer ausgewählt werden. Hier wurde als Betriebszustand ein unbeabsichtigtes Absenken eines Stromabnehmers festgelegt. Es können auch mehrere Betriebszustände ausgewählt werden. Diese werden wiederum durch ihre Farben repräsentiert. Ein erstes begrenztes Gebiet mit gehäuftem Auftreten eines ersten vorgegebenen Betriebszustands wird mit einem Kreis einer ersten Farbe gekennzeichnet, während ein zweites begrenztes Gebiet mit gehäuftem Auftreten eines zweites vorgegebenen Betriebszustands mit einem Kreis einer zweiten Farbe gekennzeichnet wird, wobei die erste Farbe sich von der zweiten Farbe unterscheidet.

Die Größen der Kreise können analog die relative Häufigkeit der Meldungen zu dem vorgegebenen Betriebszustand in dem begrenzten Gebiet skizzieren.

Vom Benutzer kann ausgewählt werden, wann ein begrenztes Gebiet überhaupt dargestellt werden soll, also welche relative Häufigkeit der Meldungen zu dem vorgegebenen Betriebszustand in den auszugebenden begrenzten Gebieten überhaupt mindestens vorliegen muss, um diese darzustellen. Hier liegt dieser Wert bei 1% der Gesamtanzahl der gespeicherten und ausgewerteten Meldungen, kann aber bis zu 10% erhöht werden. Dabei werden hier nur Meldungen von Fahrzeugen auf nichtidentischen Fahrten berücksichtigt. Hier sollen zumindest zwei Meldungen von Fahrzeugen auf nichtidentischen Fahrten im begrenzten Gebiet vorliegen, damit das begrenzte Gebiet dargestellt wird. Auch diese Vorgabe ist vom Benutzer zu treffen und gegebenenfalls zu variieren.

Die Ausgabe erfolgt hier an den Betreiber der Infrastruktureinrichtung zur Planung der Wartung.

Weitere Ausgaben können sein: die Anzahl an Meldungen insgesamt, die Anzahl an Meldungen im jeweiligen erkannten Gebiet des gehäuften Auftretens des vorgegebenen Betriebszustands, die Anzahl an Fahrzeugen im betrachteten Zeitraum im jeweiligen erkannten Gebiet des gehäuften Auftretens des vorgegebenen Betriebszustands, insbesondere die auch zumindest eine Meldung zu ihrem jeweiligen (beliebigen) Betriebszustand im betreffenden Gebiet erzeugt haben, sowie die relative Häufigkeit der Meldungen zu dem wenigstens einen vorgegebenen Betriebszustand in dem jeweiligen Gebiet mit gehäuftem Auftreten des vorgegebenen Betriebszustands relativ zu der aus der Datenbank ausgelesenen Gesamtanzahl an Meldungen zu dem wenigstens einen vorgegebenen Betriebszustand.

## Patentansprüche

1. Verfahren zur Überwachung von Infrastruktureinrichtungen eines Streckennetzes für Fahrzeuge, welche Fahrzeuge Meldungen über ihren jeweiligen Betriebszustand erzeugen, die mit einem Zeitpunkt und einer Ortsangabe, die das Auftreten des gemeldeten Betriebszustands repräsentieren, verknüpft an eine landseitige Auswerteeinrichtung versandt werden, die von der landseitigen Auswerteeinrichtung empfangen, in einer Datenbank gespeichert und ausgewertet werden, wobei die folgenden Verfahrensschritte durchgeführt werden:
- Auslesen der Meldungen eines vorgegebenen Zeitraums zu wenigstens einem vorgegebenem Betriebszustand aus der Datenbank;
- Ermitteln von begrenzten Gebieten mit gehäuftem Auftreten des vorgegebenen Betriebszustands mittels eines vorgegebenen automatischen Segmentierungsalgorithmus durch Gruppieren der Ortsangaben;
- Erkennen der Infrastruktureinrichtungen in den Gebieten des gehäuften Auftretens des vorgegebenen Betriebszustands als mögliche Ursache des vorgegebenen Betriebszustands der Fahrzeuge und
- Ausgeben von Informationen über die als mögliche Ursache des vorgegebenen Betriebszustands der Fahrzeuge erkannten Infrastruktureinrichtungen.

2. Verfahren nach Anspruch 1, **gekennzeichnet durch** folgende Verfahrensschritte:
- Erkennen der Fahrzeuge in Gebieten vereinzelten Auftretens des vorgegebenen Betriebszustands als mögliche Ursache des vorgegebenen Betriebszustands der Fahrzeuge und
- Ausgeben von Informationen über die als mögliche Ursache des vorgegebenen Betriebszustands der Fahrzeuge erkannten Fahrzeuge.

3. Verfahren nach einem der Ansprüche 1 oder 2, **gekennzeichnet durch** folgende Verfahrensschritte:
- Auslesen wenigstens einer weiteren Meldung zu dem wenigstens einen vorgegebenen Betriebszustand aus der Datenbank, die mit einem Zeitpunkt, der das Auftreten des gemeldeten Betriebszustands repräsentiert, verknüpft ist, welcher dem vorgegebenen Zeitraum folgt;
- Mittels eines vorgegebenen Algorithmus' ermitteln, ob die wenigstens eine weitere Meldung einem begrenzten Gebiet mit gehäuftem Auftreten des vorgegebenen Betriebszustands zuzuordnen ist und falls die wenigstens eine weitere Meldung einem begrenzten Gebiete mit gehäuftem Auftreten des vorgegebenen Betriebszustands zuzuordnen ist,
- Erkennen der Infrastruktureinrichtungen des begrenzten Gebiets des gehäuften Auftretens des vorgegebenen Betriebszustands als mögliche Ursache des vorgegebenen Betriebszustands der Fahrzeuge und
- Ausgeben wenigstens einer Information über die als mögliche Ursache des vorgegebenen Betriebszustands der Fahrzeuge erkannten Infrastruktureinrichtungen.

4. Verfahren nach einem der Ansprüche 1 bis 3,
**dadurch gekennzeichnet, dass**
zum Ermitteln von den begrenzten Gebieten mit gehäuftem Auftreten des vorgegebenen Betriebszustands mittels des vorgegebenen Algorithmus' ausschließlich Meldungen zum vorgegebenen Betriebszustands von Fahrzeugen auf nichtidentischen Fahrten berücksichtigt werden.

5. Verfahren nach einem der Ansprüche 1 bis 4,
**dadurch gekennzeichnet, dass**
die begrenzten Gebiete mit gehäuftem Auftreten des vorgegebenen Betriebszustands mittels eines K-Means-Algorithmus ermittelt werden.

6. Verfahren nach Anspruch 5,
**dadurch gekennzeichnet, dass**
eine Anzahl an möglichen begrenzten Gebieten innerhalb eines Gesamtgebiets in Abhängigkeit des Gesamtgebiets und in Abhängigkeit des vorgegebenen Betriebszustands vorgegeben wird.

7. Verfahren nach einem der Ansprüche 1 bis 4,
**dadurch gekennzeichnet, dass**
die begrenzten Gebiete mit gehäuftem Auftreten des vorgegebenen Betriebszustands mittels eines DBSCAN-Algorithmus ermittelt werden.

8. Verfahren nach Anspruch 7,
**dadurch gekennzeichnet, dass**
eine maximale Distanz zwischen den Orten des Auftretens der vorgegebenen Betriebszustände in Abhängigkeit des vorgegebenen Betriebszustands vorgegeben wird.

9. Verfahren nach einem der Ansprüche 1 bis 8,
**dadurch gekennzeichnet, dass**
Informationen ausgegeben werden zu
- einer Gesamtanzahl an aus der Datenbank ausgelesenen Meldungen zu dem wenigstens einen vorgegebenen Betriebszustand und/oder zu
- einer jeweiligen Anzahl an Meldungen zu dem wenigstens einen vorgegebenen Betriebszustand in den Gebieten mit gehäuftem Auftreten des vorgegebenen Betriebszustands und/oder zu
- einer jeweiligen relativen Häufigkeit der Meldungen zu dem wenigstens einen vorgegebenen Betriebszustand in den Gebieten mit gehäuftem Auftreten des vorgegebenen Betriebszustands relativ zu der aus der Datenbank ausgelesenen Gesamtanzahl an Meldungen zu dem wenigstens einen vorgegebenen Betriebszustand und/oder zu
- einer jeweiligen Anzahl an Meldungen zu dem wenigstens einen vorgegebenen Betriebszustand von nichtidentischen Fahrzeugen oder von Fahrzeugen auf nichtidentischen Fahrten in den Gebieten mit gehäuftem Auftreten des vorgegebenen Betriebszustands und/oder zu
- einer jeweiligen relativen Häufigkeit an Meldungen zu dem wenigstens einen vorgegebenen Betriebszustand von nichtidentischen Fahrzeugen oder von Fahrzeugen auf nichtidentischen Fahrten in den Gebieten mit gehäuftem Auftreten des vorgegebenen Betriebszustands relativ zu der aus der Datenbank ausgelesenen Gesamtanzahl an Meldungen zu dem wenigstens einen vorgegebenen Betriebszustand und/oder zu
- einer jeweiligen Ausdehnung der begrenzten Gebiete mit gehäuftem Auftreten des vorgegebenen Betriebszustands und/oder zu
- einer Anzahl an möglichen begrenzten Gebieten innerhalb eines Gesamtgebiets der Meldungen zu dem vorgegebenen Betriebszustand und/oder zu
- dem Algorithmus zum Ermitteln der begrenzten Gebiete mit gehäuftem Auftreten des vorgegebenen Betriebszustands und/oder zu
- dem vorgegebenen Betriebszustand.

10. Verfahren nach einem der Ansprüche 1 bis 9,
**dadurch gekennzeichnet, dass**
eine Rangliste der Gebiete mit gehäuftem Auftreten des vorgegebenen Betriebszustands erstellt und ausgegeben wird in Abhängigkeit
- einer jeweiligen Anzahl der Meldungen zu dem wenigstens einen vorgegebenen Betriebszustand;
- einer jeweiligen Ausdehnung der begrenzten Gebiete mit gehäuftem Auftreten des vorgegebenen Betriebszustands und
- einer jeweiligen relativen Häufigkeit der Meldungen zu dem wenigstens einen vorgegebenen Betriebszustand in den Gebieten mit gehäuftem Auftreten des vorgegebenen Betriebszustands relativ zu einer aus der Datenbank ausgelesenen Gesamtanzahl an Meldungen zu dem wenigstens einen vorgegebenen Betriebszustand.

11. Verfahren nach einem der Ansprüche 1 bis 10,
**dadurch gekennzeichnet, dass**
das Ermitteln der begrenzten Gebiete mit gehäuftem Auftreten des vorgegebenen Betriebszustands mittels des vorgegebenen Algorithmus' oder wenigstens das Ausgeben von Informationen über die als mögliche Ursache des vorgegebenen Betriebszustands der Fahrzeuge erkannten Infrastruktureinrichtungen in Abhängigkeit erfolgt von:
- einer vorgegebenen relativen Häufigkeit der Meldungen zu dem wenigstens einen vorgegebenen Betriebszustand in den vorgegebenen möglichen begrenzten Gebieten mit gehäuftem Auftreten des vorgegebenen Betriebszustands relativ zu einer aus der Datenbank ausgelesenen Gesamtanzahl an Meldungen zu dem wenigstens einen vorgegebenen Betriebszustand.

12. Verfahren nach Anspruch 11,
**dadurch gekennzeichnet, dass**
die Anzahl an möglichen begrenzten Gebieten mit gehäuftem Auftreten des vorgegebenen Betriebszustands innerhalb des Gesamtgebiets der Meldungen zu dem vorgegebenen Betriebszustand und, dass die relative Häufigkeit der Meldungen zu dem wenigstens einen vorgegebenen Betriebszustand in den vorgegebenen möglichen begrenzten Gebieten mit gehäuftem Auftreten des vorgegebenen Betriebszustands relativ zu der aus der Datenbank ausgelesenen Gesamtanzahl an Meldungen zu dem wenigstens einen vorgegebenen Betriebszustand von einem Benutzer vorgegeben werden.

13. Verfahren nach einem der Ansprüche 1 bis 12,
**dadurch gekennzeichnet, dass**
es zur Überwachung von Infrastruktureinrichtungen eines Streckennetzes für Schienenfahrzeuge dient, wobei der wenigstens eine vorgegebene Betriebszustand einen ungeplant abgesenkten Stromabnehmer der Schienenfahrzeuge betrifft und/oder wobei der wenigstens eine vorgegebene Betriebszustand ein ungeplantes Abschalten eines Stromsystems der Schienenfahrzeuge betrifft und/oder wobei der wenigstens eine vorgegebene Betriebszustand eine Sandausschüttung der Schienenfahrzeuge betrifft und/oder wobei der wenigstens eine vorgegebene Betriebszustand eine Öl-Schmierung der Schienen durch die Schienenfahrzeuge betrifft und/oder wobei der wenigstens eine vorgegebene Betriebszustand einen fehlgeschlagenen Kupplungsvorgang der Schienenfahrzeuge betrifft und/oder wobei der wenigstens eine vorgegebene Betriebszustand Türöffnungsfehler der Schienenfahrzeuge betrifft und/oder wobei der wenigstens eine vorgegebene Betriebszustand die Überschreitung eines vorgegebenen Ruckwerts der Schienenfahrzeuge betrifft und/oder wobei der wenigstens eine vorgegebene Betriebszustand Schnellbremsungen der Schienenfahrzeuge betrifft und/oder wobei der wenigstens eine vorgegebene Betriebszustand Kommunikationsfehler der Schienenfahrzeuge mit einer Leitstelle betrifft.

14. Computerprogrammprodukt, umfassend Befehle, die bei der Ausführung des Programms durch einen Computer diesen veranlassen, das Verfahren nach einem der Ansprüche 1 bis 13 auszuführen

## Claims

1. Method for monitoring infrastructure facilities of a route network for vehicles, which vehicles generate messages about their respective operating state, which messages are transmitted with an associated time and an associated location statement, which represent the occurrence of the signalled operating state, to a land-based evaluation device, said messages being received by the land-based evaluation device, stored in a database and evaluated, wherein the following method steps are performed:
- reading the messages of a predefined time period relating to at least one predefined operating state from the database;
- determining limited areas with frequent occurrence of the predefined operating state by means of a predefined automatic segmentation algorithm by grouping the location statements;
- identifying the infrastructure facilities in the areas with the frequent occurrence of the predefined operating state as a possible cause of the predefined operating state of the vehicles, and
- outputting information about the infrastructure facilities which are identified as a possible cause of the predefined operating state of the vehicles.

2. Method according to Claim 1,
**characterized by** the following method steps:
- identifying the vehicles in areas with isolated occurrence of the predefined operating state as a possible cause of the predefined operating state of the vehicles, and
- outputting information about the vehicles that are identified as a possible cause of the predefined operating state of the vehicles.

3. Method according to either one of Claims 1 and 2, **characterized by** the following method steps:
- reading at least one additional message relating to the at least one predefined operating state from the database, which message is associated with a time that represents the occurrence of the signalled operating state, which follows the predefined time period;
- using a predefined algorithm to determine whether the at least one additional message should be assigned to a limited area with frequent occurrence of the predefined operating state, and if the at least one additional message should be assigned to a limited area with frequent occurrence of the predefined operating state,
- identifying the infrastructure facilities of the limited area with the frequent occurrence of the predefined operating state as a possible cause of the predefined operating state of the vehicles, and
- outputting at least one information item about the infrastructure facilities that are identified as a possible cause of the predefined operating state of the vehicles.

4. Method according to any one of Claims 1 to 3,
**characterized in that**
to determine the limited areas with frequent occurrence of the predefined operating state by means of the predefined algorithm, exclusively messages relating to the predefined operating state of vehicles on non-identical journeys are taken into account.

5. Method according to any one of Claims 1 to 4,
**characterized in that**
the limited areas with frequent occurrence of the predefined operating state are determined by means of a k-means algorithm.

6. Method according to Claim 5,
**characterized in that**
a number of possible limited areas within an entire area is predefined as a function of the entire area and as a function of the predefined operating state.

7. Method according to any one of Claims 1 to 4,
**characterized in that**
the limited areas with frequent occurrence of the predefined operating state are determined by means of a DBSCAN algorithm.

8. Method according to Claim 7,
**characterized in that**
a maximum distance between the locations of the occurrence of the predefined operating states is predefined as a function of the predefined operating state.

9. Method according to any one of Claims 1 to 8,
**characterized in that**
information is output relating to
- a total number of messages read from the database relating to the at least one predefined operating state, and/or relating to
- a respective number of messages relating to the at least one predefined operating state in the areas with frequent occurrence of the predefined operating state, and/or relating to
- a respective relative frequency of the messages relating to the at least one predefined operating state in the areas with frequent occurrence of the predefined operating state relative to the total number of messages read from the database relating to the at least one predefined operating state, and/or relating to
- a respective number of messages relating to the at least one predefined operating state of non-identical vehicles or of vehicles on non-identical journeys in the areas with frequent occurrence of the predefined operating state, and/or relating to
- a respective relative frequency of messages relating to the at least one predefined operating state of non-identical vehicles or of vehicles on non-identical journeys in the areas with frequent occurrence of the predefined operating state relative to the total number of messages read from the database relating to the at least one predefined operating state, and/or relating to
- a respective extent of the limited areas with frequent occurrence of the predefined operating state, and/or relating to
- a number of possible limited areas within an entire area of the messages relating to the predefined operating state, and/or relating to
- the algorithm for determining the limited areas with frequent occurrence of the predefined operating state, and/or relating to
- the predefined operating state.

10. Method according to any one of Claims 1 to 9, **characterized in that**
a ranking list of the areas with frequent occurrence of the predefined operating state is created and is output as a function of
- a respective number of messages relating to the at least one predefined operating state;
- a respective extent of the limited areas with frequent occurrence of the predefined operating state and
- a respective relative frequency of the messages relating to the at least one predefined operating state in the areas with frequent occurrence of the predefined operating state relative to a total number of messages read from the database relating to the at least one predefined operating state.

11. Method according to any one of Claims 1 to 10, **characterized in that**
the determination of the limited areas with frequent occurrence of the predefined operating state by means of the predefined algorithm, or at least the output of information about the infrastructure facilities identified as a possible cause of the predefined operating state of the vehicles, is carried out as a function of:
- a predefined relative frequency of the messages relating to the at least one predefined operating state in the predefined possible limited areas with frequent occurrence of the predefined operating state relative to a total number of messages read from the database relating to the at least one predefined operating state.

12. Method according to Claim 11,
**characterized in that**
the number of possible limited areas with frequent occurrence of the predefined operating state within the entire area of the messages relating to the predefined operating state, and the relative frequency of the messages relating to the at least one predefined operating state in the predefined possible limited areas with frequent occurrence of the predefined operating state relative to the total number of messages read from the database relating to the at least one predefined operating state, are predefined by a user.

13. Method according to any one of Claims 1 to 12, **characterized in that**
it is used for monitoring infrastructure facilities of a route network for rail vehicles, wherein the at least one predefined operating state relates to an unplanned lowering of a pantograph of the rail vehicles and/or wherein the at least one predefined operating state relates to an unplanned shutdown of a power system of the rail vehicles and/or wherein the at least one predefined operating state relates to a distribution of sand by the rail vehicles and/or wherein the at least one predefined operating state relates to an oil lubrication of the rails by the rail vehicles and/or wherein the at least one predefined operating state relates to a failed coupling operation of the rail vehicles and/or wherein the at least one predefined operating state relates to door opening faults of the rail vehicles and/or wherein the at least one predefined operating state relates to the exceeding of a predefined jerk value of the rail vehicles and/or wherein the at least one predefined operating state relates to rapid braking operations of the rail vehicles and/or wherein the at least one predefined operating state relates to communication errors of the rail vehicles with a control centre.

14. Computer program product comprising instructions that, when the program is executed by a computer, cause said computer to perform the method according to any of Claims 1 to 13.

## Revendications

1. Procédé de contrôle de dispositifs d'infrastructure d'un réseau de voies pour des véhicules, lesquels véhicules produisent, sur leur état de fonctionnement respectif, des messages qui, combinés à un instant et à une indication de lieu, qui représentent l'apparition de l'état de fonctionnement annoncé sont envoyés à un dispositif d'analyse du côté de la terre, qui sont reçus par le dispositif d'analyse du côté de la terre, sont mise en mémoire dans une base de données et qui sont analysés, dans lequel on effectue les stades de procédé suivants :
- lecture dans la base de données des messages d'un laps de temps donné à l'avance se rapportant au moins à un état de fonctionnement donné à l'avance ;
- détermination de domaines limités à apparition fréquente de l'état de fonctionnement donné à l'avance, au moyen d'un algorithme de segmentation automatique donné à l'avance par regroupement des indications de lieu ;
- détection des dispositifs d'infrastructure dans les domaines à apparition fréquente de l'état de fonctionnement donné à l'avance comme cause possible de l'état de fonctionnement donné à l'avance des véhicules et
- émission d'informations sur les dispositifs d'infrastructure détectés comme cause possible de l'état de fonctionnement donné à l'avance des véhicules.

2. Procédé suivant la revendication 1,
**caractérisé par** les stades de procédé suivants :
- détection des véhicules dans des domaines d'apparition individualisés de l'état de fonctionnement donné à l'avance comme cause possible de l'état de fonctionnement donné à l'avance des véhicules et
- émission d'informations sur les véhicules détectés comme cause possible de l'état de fonctionnement donné à l'avance des véhicules.

3. Procédé suivant l'une des revendications 1 ou 2, **caractérisé par** les stades de procédé suivants :
- lecture dans la base de données au moins d'un autre message se rapportant au au moins un état de fonctionnement donné à l'avance , qui est combiné à un instant, qui représente l'apparition de l'état de fonctionnement annoncé, instant qui suit le laps de temps donné à l'avance ;
- au moyen d'un algorithme donné à l'avance, détermination du point de savoir, si le au moins un autre message à associer à un domaine limité à apparition fréquente de l'état de fonctionnement donné à l'avance et, dans cas où le au moins un autre message est à associer à un domaine limité à apparition fréquente de l'état de fonctionnement donné à l'avance,
- détection des dispositifs d'infrastructure du domaine limité de l'apparition fréquente de l'état de fonctionnement donné à l'avance comme cause possible de l'état de fonctionnement donné à l'avance des véhicules et
- émission d'au moins une information sur les dispositifs d'infrastructure détectés comme cause possible de l'état de fonctionnement donné à l'avance des véhicules.

4. Procédé suivant l'une des revendications 1 à 3, **caractérisé en ce que**
pour la détermination des domaines limités à apparition fréquente de l'état de fonctionnement donné à l'avance, au moyen de l'algorithme donné à l'avance, on prend en compte exclusivement des messages se rapportant à l'état de fonctionnent donné à l'avance de véhicules sur des trajets qui ne sont pas les mêmes.

5. Procédé suivant l'une des revendications 1 à 4, **caractérisé en ce que**
on détermine les domaines limités à apparition fréquente de l'état de fonctionnement donné à l'avance au moyen d'un algorithme K-Means.

6. Procédé suivant la revendication 5,
**caractérisé en ce que**
l'on prescrit un nombre de domaines limités possibles dans un domaine d'ensemble en fonction du domaine d'ensemble et en fonction de l'état de fonctionnement donné à l'avance.

7. Procédé suivant l'une des revendications 1 à 4, **caractérisé en ce que**
l'on détermine les domaines limités à apparition fréquente de l'état de fonctionnement donné à l'avance au moyen d'un algorithme DBSCAN.

8. Procédé suivant la revendication 7,
**caractérisé en ce que**
l'on prescrit une distance maximum entre les lieux de l'apparition des états de fonctionnement donnés à l'avance en fonction de l'état de fonctionnement donné à l'avance.

9. Procédé suivant l'une des revendications 1 à 8, **caractérisé en ce que**
on émet des informations sur
- un nombre d'ensemble de messages lus dans la base de données, se rapportant au au moins un état de fonctionnement donné à l'avance, et/ou
- sur un nombre respectif de messages, se rapportant au au moins un état de fonctionnement donné à l'avance dans les domaines à apparition fréquente de l'état de fonctionnement donné à l'avance, et/ou
- sur une fréquence relative respective des messages, se rapportant au au moins un état de fonctionnement donné à l'avance dans les domaines à apparition fréquente de l'état de fonctionnement donné à l'avance, par rapport au nombre d'ensemble lu dans la base de données de messages, se rapportant au au moins un état de fonctionnement donné à l'avance, et/ou
- sur un nombre respectif de messages, se rapportant au au moins un état de fonctionnement donné à l'avance de véhicules, qui ne sont pas les mêmes ou sur des véhicules sur des trajets, qui ne sont pas les mêmes, dans les domaines à apparition fréquente de l'état de fonctionnement donné à l'avance, et/ou
- sur une fréquence relative respective de messages, se rapportant au au moins un état de fonctionnement donné à l'avance de véhicules, qui ne sont pas les mêmes, ou de véhicules sur des trajets, qui ne sont pas les mêmes, dans les domaines à apparition fréquente de l'état de fonctionnement donné à l'avance, par rapport au nombre d'ensemble lu dans la base de données de messages, se rapportant au au moins un état de fonctionnement donné à l'avance, et/ou
- sur une étendue respective des domaines limités à apparition fréquente de l'état de fonctionnement donné à l'avance et/ou
- sur un nombre de domaines limités possibles dans un domaine d'ensemble des messages se rapportant à l'état de fonctionnement donné à l'avance et/ou
- sur l'algorithme de détermination des domaines limités à apparition fréquente de l'état de fonctionnement donné à l'avance et/ou
- sur l'état de fonctionnement donné à l'avance.

10. Procédé suivant l'une des revendications 1 à 9, **caractérisé en ce que**
l'on établit et on émet un classement des domaines à apparition fréquente de l'état de fonctionnement donné à l'avance en fonction
- d'un nombre respectif des messages, se rapportant au au moins un état de fonctionnement donné à l'avance ;
- d'une étendue respective des domaines limités à apparition fréquente de l'état de fonctionnement donné à l'avance et
- d'une fréquence relative respective des messages, se rapportant au au moins un état de fonctionnement donné à l'avance dans les domaines à apparition fréquente de l'état de fonctionnement donné à l'avance, par rapport à un nombre d'ensemble lu dans la base de données de messages, se rapportant au au moins un état de fonctionnement donné à l'avance.

11. Procédé suivant l'une des revendications 1 à 10, **caractérisé en ce que**
l'on effectue la détermination des domaines limités à apparition fréquente de l'état de fonctionnement donné à l'avance au moyen de l'algorithme donné à l'avance ou on effectue au moins l'émission d'informations sur les dispositifs d'infrastructure détectés comme cause possible de l'état de fonctionnement donné à l'avance des véhicules en fonction de :
- une fréquence relative donnée à l'avance des messages, se rapportant au au moins un état de fonctionnement donné à l'avance dans les domaines limités possibles donnés à l'avance à apparition fréquente de l'état de fonctionnement donné l'avance et relatif à un nombre d'ensemble lu dans la base de données de messages, se rapportant au au moins un état de fonctionnement donné à l'avance.

12. Procédé suivant la revendication 11,
**caractérisé en ce que**
le nombre de domaines limités possibles à apparition fréquente de l'état de fonctionnement donné à l'avance dans le domaine d'ensemble des messages, se rapportant à l'état de fonctionnement déterminé à l'avance, et **en ce que** la fréquence relative des messages se rapportant au au moins un état de fonctionnement donné à l'avance dans les domaines limités possibles donnés à l'avance à apparition fréquente de l'état de fonctionnement donné à l'avance, par rapport au nombre d'ensemble lu dans la base de données de messages, se rapportant à au moins un état de fonctionnement donné à l'avance, sont prescrits par un utilisateur.

13. Procédé suivant l'une des revendications 1 à 12, **caractérisé en ce que**
il sert au contrôle des dispositifs d'infrastructure d'un réseau de voies de véhicules ferroviaires, dans lequel le au moins un état de fonctionnement donné à l'avance concerne un appareil de prise de courant affaissé intempestivement d'un système de courant des véhicules ferroviaires et/ou dans lequel le au moins un état de fonctionnement donné à l'avance concerne un déversement de sable des véhicules ferroviaires et/ou dans lequel le au moins un état de fonctionnement donné à l'avance concerne une lubrification par de l'huile des rails par les véhicules ferroviaires et/ou dans lequel le au moins un état de fonctionnement donné à l'avance concerne une opération d'attelage défectueuse des véhicules ferroviaires et/ou dans lequel le au moins un état de fonctionnement donné à l'avance concerne un défaut d'ouverture de porte des véhicules ferroviaires et/ou dans lequel le au moins un état de fonctionnement donné à l'avance concerne le dépassement d'une valeur de choc des véhicules ferroviaires et/ou dans lequel le au moins un état de fonctionnement donné à l'avance concerne des freinages rapides des véhicules ferroviaires et/ou dans lequel le au moins un état de fonctionnement donné à l'avance concerne des défaillances de communication des véhicules ferroviaires avec un poste de conduite.

14. Produit de programme d'ordinateur, comprenant des instructions qui, lorsque lors de la réalisation du programme par un ordinateur, font que celui-ci effectue le procédé suivant l'une des revendications 1 à 13.
